# EUROPÄISCHE PATENTSCHRIFT

(11) **EP 2 827 082 B1**
(45) Veröffentlichungstag und Bekanntmachung des Hinweises auf die Patenterteilung: **08.07.2020**
(21) Anmeldenummer: 14170012.0
(22) Anmeldetag: 27.05.2014
(51) Int. Cl.: F25B 30/06, F25B 49/02

(54) **Verfahren zum Steuern eines Kompressors einer Wärmepumpe**
Method for controlling a compressor a heat pump
Procédé de commande d'un compresseur d'une pompe à chaleur

(30) Priorität: 16.07.2013 DE 102013213906; 17.07.2013 DE 102013214063
(43) Veröffentlichungstag der Anmeldung: 21.01.2015
(73) Patentinhaber: Robert Bosch GmbH, 70442 Stuttgart (DE)
(72) Erfinder: Eklund, Gunnar, 57392 Tranas (SE); Kronstrom, Urban, 57339 Tranas (SE); Rickardsson, Joakim, 57393 Tranas (SE); Alex, Titus, 57337 Tranas (SE); Drugge, Styrbjorn, 57338 Tranas (SE); Van der lieht, Jens, 57334 Tranas (SE)

(56) Entgegenhaltungen:
- WO-A1-2013/076949
- US-A1- 2004 144 528
- US-A1- 2007 295 477

## Beschreibung

Die Erfindung betrifft ein Verfahren zum Steuern eines Kompressors einer Wärmepumpe gemäß Patentanspruch 1 und ein Steuergerät zum Steuern eines Kompressors einer Wärmepumpe gemäß Patentanspruch 10 und ein Wärmepumpensystem gemäß Patentanspruch 11.

### Stand der Technik

Im Stand der Technik ist es bekannt, eine Wärmepumpe einzusetzen, um Erdwärme über eine Erdsonde aus dem Erdboden aufzunehmen und mithilfe einer Wärmepumpe zu nutzen. Dabei muss darauf geachtet werden, dass die Erdsonde nicht zu stark abgekühlt wird und dabei Schäden an den Leitungen auftreten. Dies wird dadurch vermieden, dass eine Sicherheitsfunktion vorgesehen ist, die den Kompressor der Wärmepumpe abschaltet, wenn die Erdsonde eine vorgegebene Temperatur unterschreitet. Nach dem Abschalten des Kompressors muss der Kompressor durch eine Bedienperson händisch wieder aktiviert werden. Dadurch wird auf jeden Fall sichergestellt, dass durch ein automatisches Wiedereinschalten der Wärmepumpe keine Beschädigung der Leitungen der Erdsonde beispielsweise durch ein Auffrieren erfolgt.

Die WO 2013/076949 A1 und die US 2007/0295477 A1 offenbaren Wärmegewinnungssysteme mit einem Solekreislauf und einem Kältemittelkreislauf. Mit dem Solekreislauf wird Erdwärme gewonnen, die über einen Wärmetauscher auf den Kältemittelkreislauf übertragen wird. Die Temperatur des Solekreislaufs wird dabei mittels Temperaturfühlern erfasst. WO 2013/076949 A1 und US 2007/0295477 A1 offenbaren ein Verfahren zum Steuern eines Kompressors einer Wärmepumpe gemäß dem Oberbegriff des Anspruchs 1 und ein Wärmepumpensystem gemäß dem Oberbegriff des Anspruchs 11.

### Offenbarung der Erfindung

Die Aufgabe der Erfindung besteht darin, ein verbessertes Verfahren zum Steuern eines Kompressors einer Wärmepumpe bereit zu stellen. Ferner besteht die Die Aufgaben der Erfindung werden durch das Verfahren gemäß Patentanspruch 1, durch das Steuergerät gemäß Patentanspruch 10 und durch das Wärmepumpensystem gemäß Patentanspruch 11 gelöst.

Weitere vorteilhafte Ausführungsformen der Erfindung sind in den abhängigen Ansprüchen angegeben.

Ein Vorteil des beschriebenen Verfahrens besteht darin, dass der Kompressor der Wärmepumpe nach dem Abschalten wieder automatisch aktiviert wird, wobei jedoch sichergestellt wird, dass die Leitungen der Erdsonde nicht durch zu kühle Temperaturen beschädigt werden. Auf diese Weise ist es nicht erforderlich, dass der Kompressor der Wärmepumpe händisch gestartet wird. Dies wird dadurch erreicht, dass nach dem Abschalten des Kompressors oder der Reduzierung der Leistung des Kompressors entweder eine vorgegebene Zeitdauer gewartet wird, bis die Leistung des Kompressors wieder erhöht wird oder gewartet wird, bis die Temperatur des Mediums im Zulauf zum Wärmetauscher auf einen vorgegebenen Wert gestiegen ist. Sowohl die Zeitdauer als auch der Wert der Temperatur sind so gewählt, dass ein Zufrieren und eine Beschädigung der Leitungen der Erdsonde sicher vermieden werden. Somit ist es möglich, dass das Verfahren zum Steuern des Kompressors automatisch durchgeführt wird, ohne dass eine Bedienperson eine Aktivierung oder Erhöhung der Leistung des Kompressors händisch durchführen muss.

Diese Lösung kann sowohl bei bereits existierenden oder neuen Wärmepumpensystemen eingesetzt werden. Zudem kann diese Lösung dann eingesetzt werden, wenn beispielsweise bei einem bereits existierenden Wärmepumpensystem ein neuer Kompressor eingebaut wird, dessen Leistung höher ist als die Leistung des bisher verwendeten Kompressors. Die erhöhte Leistung des Kompressors kann dazu führen, dass die Erdsonde und insbesondere die Leitungen der Erdsonde öfter unterkühlt werden, so dass die Gefahr eines Zufrierens und einer Beschädigung der Erdsonde möglich ist und deshalb der Kompressor abgeschaltet wird. Insbesondere bei diesen Systemen wäre die Notwendigkeit einer händischen Aktivieren des Kompressors für die Bedienerfreundlichkeit der Wärmepumpe sehr nachteilig.

In einer weiteren Ausführungsform wird die Leistung des Kompressors nach der vorgegebenen Zeitdauer wieder erhöht bzw. der Kompressor aktiviert, wenn als Grenzwert ein erster Grenzwert verwendet wird und der Kompressor eine vorgegebene Zeitdauer betrieben wurde. Es ist insbesondere von Vorteil, wenn die vorgegebene Zeitdauer, während der der Kompressor mindestens betrieben wurde, vor der Reduzierung seiner Leistung oder vor seinem Abschalten liegt. Zudem wird die Leistung des Kompressors wieder erhöht bzw. der Kompressor wieder aktiviert, wenn die Temperatur des Mediums auf den vorgegebenen Wert gestiegen ist, wenn als Grenzwert ein zweiter Grenzwert verwendet wird. Zudem ist der zweite Grenzwert kleiner gewählt als der erste Grenzwert. Auf diese Weise wird sicher vermieden, dass ein Zufrieren oder eine Beschädigung der Leitungen der Erdsonde erfolgt. Da der erste Grenzwert höher gewählt ist als der zweite Grenzwert, reicht das Abwarten einer vorgegebenen Zeitdauer, innerhalb der sich das Medium in den Leitungen der Erdsonde wieder entsprechend aufwärmen kann. Die vorgegebene Zeitdauer wird experimentell bestimmt und ist so gewählt, dass sich das Medium der Erdsonde ausreichend erwärmt. Die Messung einer vergehenden Zeitdauer ist einfacher auszuführen als die Messung einer Temperatur des Mediums im Zulauf zum Wärmetauscher. Jedoch bietet die Messung der Temperatur des Mediums im Zulauf zum Wärmetauscher eine sichere Überprüfung der Temperatur der Erdsonde. Dazu ist es erforderlich, dass die Umwälzpumpe im Kreislauf der Erdsonde auch nach dem Abschalten des Kompressors weiterläuft. Nur dann kann eine zuverlässige Messung der Temperatur im Zulauf zum Wärmetauscher erfolgen.

Versuche haben gezeigt, dass beispielweise der erste Grenzwert einen Wert im Bereich von -3°C aufweisen kann, um die Wärmepumpe sicher zu betreiben, ohne dass die Leitungen der Erdsonde beschädigt werden und zudem ein effizienter Betrieb möglich ist. Weiterhin haben Versuche gezeigt, dass der zweite Grenzwert einen Wert im Bereich vom -5°C annehmen kann, sodass ein sicheres Betreiben der Wärmepumpe möglich ist, ohne die Leitungen der Erdsonde zu beschädigen und zudem einen effizienten Betrieb zu ermöglichen. Zudem wird bei beiden Werten eine hohe Einsatzzeit für die Wärmepumpe und damit eine gute Wärmeleistung der Wärmepumpe ermöglicht.

In einer weiteren Ausführungsform weist die Wärmepumpe ein Zusatzheizsystem auf. Das Zusatzheizsystem ist vorgesehen, um das Medium im weiteren Kreislauf im Zulauf zur Wärmepumpe aufzuheizen, wenn die Wärmepumpe durch die Erdwärme nicht ausreichend Wärme zur Verfügung stellt. Für eine effiziente Funktion der Wärmepumpe ist es erforderlich, dass auch das Zusatzheizsystem beim Abschalten des Kompressors bzw. bei der Reduzierung der Leistung des Kompressors und beim automatischem Wiedereinschalten des Kompressors bzw. bei Erhöhen der Leistung des Kompressors berücksichtigt wird. Dies wird dadurch erreicht, dass das Zusatzheizsystem beim Abschalten bzw. bei der Reduzierung der Leistung des Kompressors auch abgeschaltet wird und beim Wiedereinschalten bzw. beim Erhöhung der Leistung des Kompressors wieder in dem Zustand gestartet wird, in dem das Zusatzheizsystem beim Abschalten bzw. bei der Reduzierung der Leistung des Kompressors betrieben wurde. Auf diese Weise wird sichergestellt, dass die Funktion des Zusatzheizsystems nicht unterbrochen bzw. unnötig beeinträchtigt wird.

In einer weiteren Ausführungsform wird zusätzlich ein dritter Grenzwert für eine Temperatur vorgesehen, bei der die Wärmepumpe bzw. der Kompressors abgeschaltet werden und erst nach einer händischen Aktivierung wieder in Betrieb genommen werden kann. Der dritte Grenzwert liegt dabei unter dem zweiten Grenzwert und liegt beispielsweise im Bereich von -6°C. Damit wird sichergestellt, dass beispielsweise bei einer Fehlfunktion der Wärmepumpe die Wärmepumpe sicher abgeschaltet wird und nicht wieder automatisch eingeschaltet wird. Somit wird eine Beschädigung sowohl der Wärmepumpe als auch der Leitungen der Erdsonde sicher vermieden.

Die Erfindung wird anhand der folgenden Figuren näher erläutert. Es zeigen
Figur 1 ein Wärmepumpensystem,
Figur 2 ein schematisches Verfahren zum Betreiben des Wärmepumpensystems, und
Figur 3 ein Diagramm für einen Temperaturverlauf des Mediums im Zulauf zur Wärmepumpe.

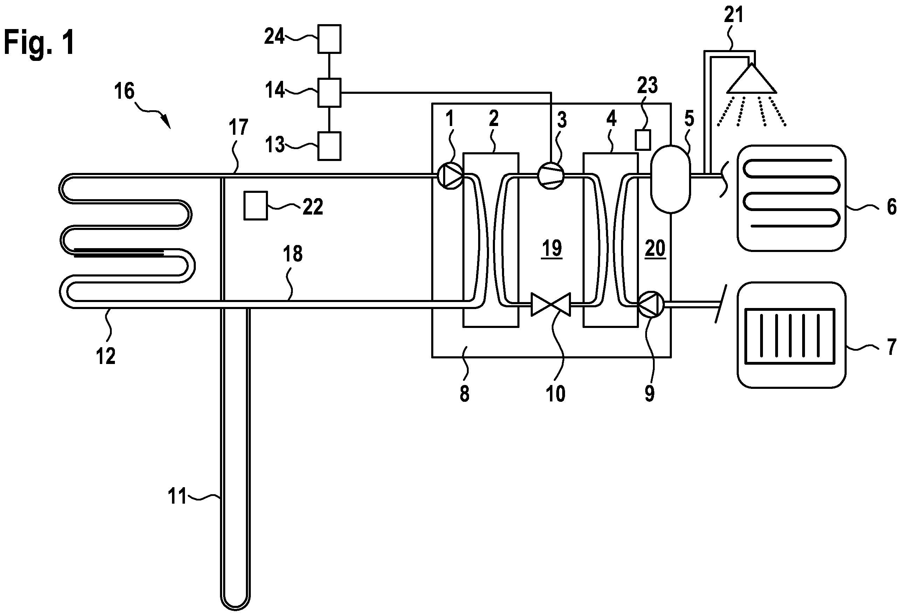

Figur 1 zeigt in einer schematischen Darstellung einen Aufbau für eine Wärmepumpe 8, die mithilfe einer Erdsonde als Wärmequelle mit Wärme aus einem Erdboden versorgt wird. Die dargestellte Wärmepumpe 8 weist einen ersten Wärmetauscher 2 auf. Der erste Wärmetauscher 2 ist mit einem ersten Kreislauf 16 verbunden. Der erste Kreislauf 16 versorgt eine Eingangsseite des ersten Wärmetauschers 2 mit einer Wärme, die aus einem Erdreich entnommen wird.

Dazu weist der erste Kreislauf 16 als Leitungen einen Bohrlochkollektor 11 und/oder einen Bodenkollektor 12 auf. Der erste Kreislauf 16 ist als geschlossener Kreislauf ausgebildet und mit einem Medium gefüllt. Abhängig von der gewählten Ausführungsform kann entweder ein Bohrlochkollektor oder ein Bodenkollektor vorgesehen sein. Weiterhin ist eine Umwälzpumpe 1 für den ersten Kreislauf 16 vorgesehen. Der erste Kreislauf 16 ist an die Umwälzpumpe 1 angeschlossen, die einen Zulauf 17 einer Eingangsseite des ersten Wärmetauschers 2 mit dem Medium des ersten Kreislaufes 16 versorgt. Beim Durchlaufen des ersten Wärmetauschers 2 gibt das Medium Wärme an den ersten Wärmetauscher 2 ab und fließt über einen Rücklauf 18 wieder zurück. Der erste Wärmetauscher 2 ist auf einer Ausgangsseite mit einem zweiten Kreislauf 19 verbunden. Der erste Wärmetauscher 2 stellt für den zweiten Kreislauf einen Verdampfer dar. Der zweite Kreislauf 19 weist ein Medium auf, das die vom ersten Kreislauf 16 zur Verfügung gestellte Wärme aufnimmt, wobei das Medium im zweiten Kreislauf 19 verdampft. Das verdampfte Medium wird über einen Ablauf einem Kompressor 3 zugeführt, der das Medium des zweiten Kreislaufes 19 verdichtet und einem Zulauf eines zweiten Wärmetauschers 4 zuführt. Im zweiten Wärmetauscher 4 wird das Medium des zweiten Kreislaufes 19 kondensiert, wobei Wärme an einen dritten Kreislauf 20 abgegeben wird.

Das Medium des zweiten Kreislaufes 19 wird von einem Rücklauf des zweiten Wärmetauschers 4 über ein Expansionsventil 10 einem Zulauf des ersten Wärmetauschers 2 zugeführt. Der zweite Wärmetauscher 4 stellt einen Kondensator für das Medium des zweiten Kreislaufes 19 dar. Nach dem Expansionsventil 10 liegt das Medium des zweiten Kreislaufes wieder in flüssiger Form vor und wird anschließend durch Aufwärmen im ersten Wärmetauscher 2 wieder aufgeheizt.

Der dritte Kreislauf 20 weist im Ablauf des zweiten Wärmetauschers 4 einen Speicher 5 für ein Medium des dritten Kreislaufs 20 auf. Der Speicher 5 kann beispielsweise eine Fußbodenheizung 6, Heizkörper 7 oder ein Warmwassersystem 21 mit heißem Wasser bzw. warmen Wasser versorgen. Im Zulauf zum zweiten Wärmetauscher 4 ist im dritten Kreislauf 20 eine zweite Umwälzpumpe 9 vorgesehen, die das Medium des dritten Kreislaufs 20 zum zweiten Wärmetauscher 4 pumpt.

In der dargestellten Ausführungsform ist eine Zusatzheizung vorgesehen, die das Medium des ersten Kreislaufes 16 erwärmt, wenn die Wärmepumpe 8 nicht ausreichend Wärme für den dritten Kreislauf 20 zur Verfügung stellt. Diese Bedingung kann beispielsweise über einen zweiten Temperatursensor 23 im Bereich des dritten Kreislaufes 20 vom Steuergerät 14 überwacht werden. Zudem ist das Steuergerät 14 mit der Zusatzheizung 22 verbunden. Die Zusatzheizung 22 wird beispielsweise mithilfe von Strom, Gas oder Öl betrieben. Abhängig von der gewählten Ausführungsform kann auf die Zusatzheizung 22 auch verzichtet werden.

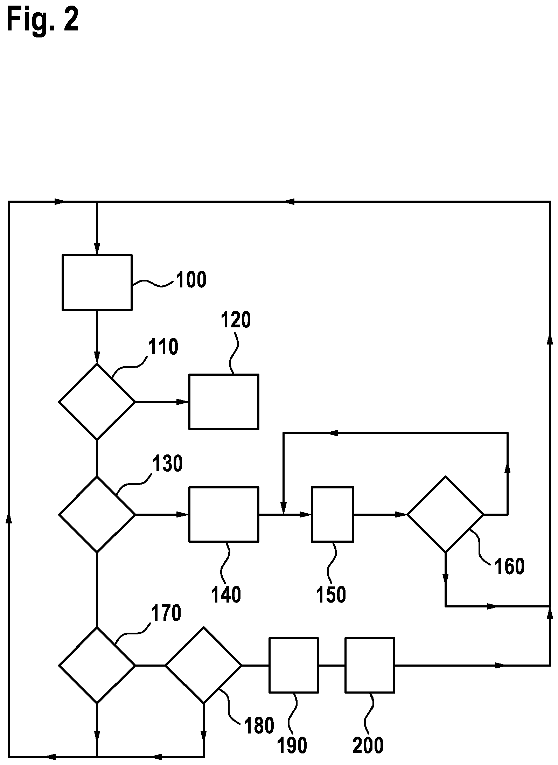

Der Bohrlochkollektor 11 befindet sich in einem Bohrloch des Erdreichs, das bis in eine vorgegebene Tiefe geführt ist. Beispielsweise kann sich ein Bohrloch bis zu einer Tiefe von 100 m in das Erdreich, d.h. den Erdboden erstrecken. Der Bodenkollektor 12 ist im Wesentlichen in einer Ebene in einer geringen Tiefe von 1 bis 2 Metern im Erdreich vergraben. Sowohl im Bohrlochkollektor 11 als auch im Bodenkollektor 12 fließt das Medium in entsprechenden Leitungen und entzieht dem Boden Wärme, die den ersten Wärmetauscher 2 der Wärmepumpe 8 zur Verfügung gestellt wird. Weiterhin ist ein Temperatursensor 13 vorgesehen, der im Zulauf 17 des ersten Kreislaufs 16 in Strömungsrichtung gesehen vor dem ersten Wärmetauscher 2 angeordnet ist. Der Temperatursensor 13 steht mit einem Steuergerät 14 in Verbindung. Das Steuergerät 14 steht zudem mit dem Kompressor 3 in Verbindung. Zudem ist ein Eingabemittel 24 vorgesehen, das mit dem Steuergerät 14 in Verbindung steht. Durch den Wärmeentzug aus dem Erdreich über den über den Bohrlochkollektor 11 besteht die Gefahr, dass das Bohrloch zufriert bzw. der Bohrlochkollektor 11 und/oder der Bodenkollektor zufriert und die Leitungen des Bohrlochkollektors 11 bzw. des Bodenkollektors 12 beschädigt werden. Zur Vermeidung einer Beschädigung der Leitungen des Bodenkollektors 12, des Bohrlochkollektors 11 bzw. zur Vermeidung eines Einfrierens des Mediums des ersten Kreislaufes wird ein Verfahren zum Steuern des Kompressors eingesetzt, das im folgenden anhand von Figur 2 beschrieben wird.

Figur 2 zeigt in einer schematischen Darstellung einen Programmablauf für das Steuergerät 14 zum Steuern des Kompressors 3 der Wärmepumpe 8. Bei Programmpunkt 100 startet das Steuergerät 14 den Kompressor 3 abhängig von vorgegebenen Parametern wie z.B. einem Wärmebedarf auf der Seite des dritten Kreislaufes 20, der beispielsweise anhand des zweiten Temperatursensors 23 erfasst wird. Sinkt die Temperatur des dritten Kreislaufs 20 unter einen vorgegebenen Wert, dann werden der Kompressor 3 und die Umwälzpumpe 1 gestartet. Bei einem folgenden Programmpunkt 110 überprüft das Steuergerät 14 mithilfe des Temperatursensors 13, ob die Temperatur im Zulauf zur Eingangsseite des ersten Wärmetauschers 2 unter einem dritten Grenzwert liegt. Der dritte Grenzwert kann beispielsweise im Bereich von -6°C liegen. Ergibt die Abfrage bei Programmpunkt 110, dass die Temperatur des Mediums des ersten Kreislaufes 16 im Zulauf zur Eingangsseite des ersten Wärmetauschers 2 unter der dritten Grenztemperatur liegt, so wird zu Programmpunkt 120 verzweigt. Bei Programmpunkt 120 schaltet das Steuergerät 14 den Kompressors 3 ab. Erst nach einer händischen Eingabe einer Bedienperson über das Eingabemittel 24 an das Steuergerät 14, kann die Wärmepumpe 8 weiter betrieben werden und das Verfahren bei Programmpunkt 100 wieder gestartet werden.

Ergibt die Abfrage bei Programmpunkt 110, dass die Temperatur des Mediums des ersten Kreislaufes 16 nicht unter dem dritten Grenzwert liegt, so wird zu Programmpunkt 130 verzweigt. Bei Programmpunkt 130 überprüft das Steuergerät 14 mithilfe des Temperatursensors 13, ob die Temperatur des Mediums des ersten Kreislaufes im Zulauf zum ersten Wärmetauscher 2 unter einer zweiten Grenztemperatur liegt. Die zweite Grenztemperatur ist höher als die dritte Grenztemperatur und kann beispielsweise im Bereich von -5°C liegen. Ergibt die Abfrage bei Programmpunkt 130, dass die Temperatur des Mediums unter dem zweiten Grenzwert liegt, so wird zu Programmpunkt 140 verzweigt. Bei Programmpunkt 140 reduziert das Steuergerät 14 wenigstens die Leistung des Kompressors 3 oder schaltet den Kompressor 3 ab. Anschließend wird zu Programmpunkt 150 verzweigt. Bei Programmpunkt 150 erfasst das Steuergerät 14 die Temperatur des Mediums des ersten Kreislaufes mithilfe des Temperatursensors 13. Das Medium des ersten Kreislaufes 16 wird weiterhin durch die Umwälzpumpe 1 umgewälzt, das heißt es wird das Medium durch den Bohrlochkollektor 11 gepumpt. Bei einem folgenden Programmpunkt 160 überprüft das Steuergerät 14 mithilfe des Temperatursensors 13, ob die Temperatur des Mediums eine vorgegebene Starttemperatur erreicht hat. Ist dies nicht der Fall, so wird zu Programmpunkt 150 zurück verzweigt. Erreicht die Temperatur des Mediums die Starttemperatur, so wird nach der Abfrage bei Programmpunkt 160 zum Startpunkt 100 zurück verzweigt und die Wärmepumpe wieder im normalen Betrieb betrieben. Die Starttemperatur liegt höher als die zweite Grenztemperatur und kann beispielsweise -3°C betragen.

Bei Programmpunkt 140 wird auch die Zusatzheizung 22 in dem Zustand gestoppt, in dem sich die Zusatzheizung 22 befindet. Üblicherweise wird vor dem Starten der Zusatzheizung 22 bei Vorliegen einer Startbedingung ein Zähler bis zu einem vorgegebenen Zählwert hoch gezählt. Auf diese Weise wird sichergestellt, dass nicht ein kurzzeitiges Ausbleiben der benötigten Wärme auf der Seite des dritten Kreislaufes 20 bereits zum Starten der Zusatzheizung 22 führt. Wird somit bei Programmpunkt 41 die Zusatzheizung gestoppt, so wird auch der Zähler gestoppt. Wird bei Programmpunkt 100 die Wärmepumpe 8 wieder in Betrieb genommen, so wird auch die Zusatzheizung 22 in dem Zustand wieder aktiviert, in dem die Zusatzheizung 22 gestoppt wurde. Das heißt, der Zähler läuft wieder an dem Wert weiter, an dem der Zähler gestoppt wurde bzw. die Zusatzheizung wird wieder aktiviert, wenn die Zusatzheizung bei der Unterbrechung aktiviert war oder die Zusatzheizung wird nicht aktiviert, wenn die Zusatzheizung bei der Unterbrechung bzw. bei der Reduzierung der Leistung des Kompressors auch nicht aktiv war.

Ergibt die Abfrage bei Programmpunkt 130, dass die Temperatur des Mediums nicht unter dem zweiten Grenzwert liegt, so wird nach Programmpunkt 170 verzweigt. Bei Programmpunkt 170 überprüft das Steuergerät 14 mithilfe des Temperatursensors 13, ob die Temperatur des Mediums des ersten Kreislaufes 16 im Zulauf 17 zum ersten Wärmetauscher 2 unter einem ersten Grenzwert liegt. Der erste Grenzwert ist größer als der zweite Grenzwert und kann beispielsweise bei -3°C liegen. Ergibt die Abfrage bei Programmpunkt 170, dass das Medium des ersten Kreislaufes eine Temperatur aufweist, die über dem ersten Grenzwert liegt. So wird zum Programmpunkt 100 zurück verzweigt. Ergibt jedoch die Abfrage bei Programmpunkt 170, dass die Temperatur des Mediums unter dem ersten Grenzwert liegt, so wird zum Programmpunkt 180 verzweigt. Bei Programmpunkt 180 überprüft das Steuergerät 14, ob der Kompressor 3 wenigstens über eine vorgegebene zusammenhängende Zeitdauer aktiv ist. Die vorgegebene Zeitdauer kann beispielsweise 45 Minuten betragen. Ergibt die Abfrage bei Programmpunkt 180, dass der Kompressor bereits die vorgegebene Zeitdauer aktiv ist, so wird zu Programmpunkt 190 verzweigt. Bei Programmpunkt 190 reduziert das Steuergerät 14 wenigstens die Leistung des Kompressors 3 oder schaltet den Kompressor 3 vollständig ab. Anschließend wird zu Programmpunkt 200 verzweigt. Bei Programmpunkt 200 wartet das Steuergerät 14 eine vorgegebene Zeitdauer, die beispielsweise im Bereich von 15 Minuten liegen kann. Anschließend wird zu Programmpunkt 100 zurück verzweigt und die Wärmepumpe wieder in Betrieb genommen.

Ergibt die Abfrage bei Programmpunkt 180, dass der Kompressor 3 noch nicht die vorgegebene zusammenhängende Zeitdauer betrieben wurde, d.h. dauernd Medium verdichtet hat, so wird zu Programmpunkt 100 zurück verzweigt.

Bei Programmpunkt 100 wird die Zusatzheizung 22 wieder in dem Zustand in Betrieb genommen, zu dem sie beispielsweise bei Programmpunkt 150 oder 190 abgeschaltet wurde.

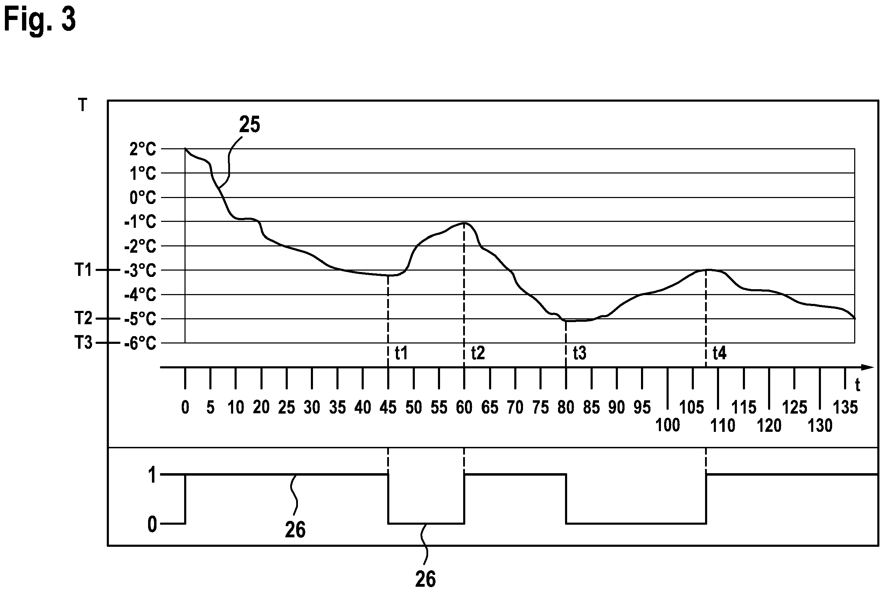

Figur 3 zeigt ein Diagramm für einen Temperaturverlauf 25 eines Mediums des ersten Kreislaufes 16. Das Medium kann beispielsweise eine Soleflüssigkeit sein. Die Temperatur wird mit dem Temperatursensor 13 am Zulauf des ersten Wärmetauschers 2 erfasst. Zudem ist zusätzlich zum Verlauf der Temperatur 25 über die Zeit t auch eine Kennlinie über den Zustand 26 des Kompressors 3 über der Zeit t aufgetragen. Die Temperatur T ist in °C aufgetragen. Der Zustand 26 nimmt entweder den Wert 0 für abgeschaltet oder reduzierte Leistung oder den Wert 1 für eingeschaltet bzw. normale Leistung an. Zum Zeitpunkt t = 0 wird der Kompressor 3 vom Steuergerät 14 eingeschaltet. Anschließend wird über den Wärmetauscher 1 dem Medium des ersten Kreislaufes 16 über den ersten Wärmetauscher 2 Wärme entzogen. Dazu ist auch die Umwälzpumpe 1 aktiviert. Auch die weiteren Teile bzw. Aggregate der Wärmepumpe 8 sind entsprechend in Betrieb. Als Folge des Wärmeentzuges sinkt die Temperatur 25 des Mediums des ersten Kreislaufes 16 ab. Die Wärmepumpe 8 wird, wie anhand der Figuren 1 und 2 erläutert entsprechend betrieben, bis zum ersten Zeitpunkt t1 das Steuergerät durch die Abfrage bei Programmpunkt 170 gemäß dem Verfahren der Figur 2 erfasst, dass die Temperatur des Mediums des ersten Kreislaufes 16 unter der ersten Grenztemperatur T1 liegt. Die erste Grenztemperatur T1 ist in dem beschriebenen Beispiel bei -3°C. Anschließend überprüft das Steuergerät bei Programmpunkt 180, ob der Kompressor 3 bereits eine vorgegebene Zeitdauer von beispielsweise 45 Minuten kontinuierlich aktiv war. In dem beschriebenen Beispiel ist der Kompressor 3 zum ersten Zeitpunkt t1 bereits seit 45 Minuten eingeschaltet und verdichtet das Medium des zweiten Kreislaufs 19, sodass das Steuergerät 14 nun den Kompressor abschaltet bzw. in seiner Leistung reduziert. Dies wird durch den Abfall der Kennlinie für den Zustand 26 von dem Wert 1 auf den Wert 0 dargestellt.

Anschließend wartet das Steuergerät 14 bei Programmpunkt 200 eine vorgegebene Zeitdauer, die in dem beschriebenen Beispiel bei 15 Minuten liegt und aktiviert dann zum zweiten Zeitpunkt t2 wieder den Kompressor 3 bzw. erhöht die Leistung des Kompressors 3 wieder auf die normale Leistung. Zwischen dem ersten Zeitpunkt t1 und dem zweiten Zeitpunkt t2 wird das Medium des ersten Kreislaufes 13 weiterhin mit der Umwälzpumpe 1 umgewälzt, so dass sich die Temperatur des Mediums des ersten Kreislaufs 16 durch die Aufnahme von Wärme aus dem Erdreich wieder erhöhen kann. Nach dem zweiten Zeitpunkt t2 fällt die Temperatur des Mediums des ersten Kreislaufs im Zulauf zum ersten Wärmetauscher 2 wieder ab, da dem Medium wieder Wärme über den ersten Wärmetauscher 2 entzogen wird. Die Wärmepumpe wird vom Steuergerät 14 wieder im Normalzustand betrieben, bis das Steuergerät zum dritten Zeitpunkt t3 bei Programmpunkt 130 feststellt, dass die Temperatur des Mediums im ersten Kreislauf 16 unter einen zweiten Grenzwert T2 gefallen ist. In dem dargestellten Ausführungsbeispiel ist der zweite Grenzwert T2 -5°C. Somit schaltet das Steuergerät 14 gemäß Programmpunkt 140 den Kompressor 3 ab oder reduziert die Leistung des Kompressors 3. Die Leistung des Kompressors 3 wird solange reduziert bzw. der Kompressor 3 bleibt solange abgeschaltet, bis das Steuergerät gemäß der Abfrage bei Programmpunkt 160 feststellt, dass die Temperatur des Mediums im ersten Kreislauf über eine Vergleichstemperatur gestiegen ist. In dem vorliegenden Beispiel ist dies beim vierten Zeitpunkt t4 der Fall. Als Vergleichstemperatur wird beispielsweise der erste Grenzwert T1 verwendet. Somit erkennt das Steuergerät 14 beim vierten Zeitpunkt t4, dass die Temperatur des Mediums des ersten Kreislaufes im Zulauf zum ersten Wärmetauscher 2 über den Vergleichswert angestiegen ist. Somit wird der Kompressor 3 gemäß Programmpunkt 100 wieder ab dem vierten Zeitpunkt t4 in Betrieb genommen.

Würde die Temperatur des Mediums des ersten Kreislaufes unter den dritten Grenzwert T3 fallen, so würde das Steuergerät 14 gemäß Programmpunkt 120 die Wärmepumpe abschalten.

Mithilfe des beschriebenen Verfahrens wird eine effiziente Betriebsweise der Wärmepumpe ermöglicht, auch wenn beispielsweise durch eine Nachrüstung ein effizienterer Kompressor 3 in eine bereits bestehende Wärmepumpe mit der Ausnutzung von Erdwärme installiert wurde. Durch das beschriebene Verfahren wird ein Vereisen und eine Beschädigung einer Erdsonde, insbesondere des Bodenkollektors und/oder des Bohrlochkollektors vermieden und trotzdem eine effiziente Verwendung der Wärmepumpe 8 ermöglicht. Abhängig von den gewählten Ausführungsformen können auch andere Werte für die erste, zweite und dritte Grenztemperatur oder dem Vergleichswert verwendet werden.

## Patentansprüche

1. Verfahren zum Steuern eines Kompressors (3) eines Kreislaufes (19) auf einer Ausgangsseite eines Wärmetauschers (2) einer Wärmepumpe (8), wobei der Wärmetauscher (2) auf einer Eingangsseite mit einem weiteren Kreislauf (16) über ein Medium mit Erdwärme versorgt wird,
**dadurch gekennzeichnet, dass** der Kompressor (3) wenigstens in der Leistung reduziert oder abgeschaltet wird, wenn die Temperatur des Mediums des weiteren Kreislaufes (16) im Zulauf zum Wärmetauscher (2) unter einem Grenzwert liegt, und dass die Leistung des Kompressors (3) wieder erhöht wird, wenn seit der Reduzierung der Leistung des Kompressors (3) eine vorgegebene Zeitdauer vergangen ist oder die Temperatur des Mediums um einen vorgegebenen Wert gestiegen ist.

2. Verfahren nach Anspruch 1, wobei als Grenzwert ein erster Grenzwert verwendet wird, und wobei die Leistung des Kompressors (3) nach der vorgegebenen Zeitdauer erhöht wird, wenn der Kompressor (3) länger als eine vorgegebene Zeit betrieben wurde.

3. Verfahren nach Anspruch 1 oder 2, wobei als Grenzwert ein zweiter Grenzwert verwendet wird, wobei der zweite Grenzwert kleiner als der erste Grenzwert ist, und wobei die Leistung des Kompressors (3) erhöht wird, wenn die Temperatur des Mediums im weiteren Kreislauf (16) im Zulauf zum Wärmetauscher (2) auf einen vorgegebenen Wert gestiegen ist.

4. Verfahren nach einem der vorhergehenden Ansprüche, wobei ein Zusatzheizsystem (22) vorgesehen ist, um das Medium im weiteren Kreislauf (16) zu erwärmen, wobei abhängig von einem Startparameter ein Zeitzähler vor dem Starten des Zusatzheizsystems (22) zu laufen beginnt, wobei das Zusatzheizsystem (22) eingeschaltet wird, wenn der Zeitzähler einen festgelegten Wert erreicht, wobei der Zeitzähler bei einem aktuellen Wert angehalten wird, wenn die Leistung des Kompressors (3) reduziert oder der Kompressor (3) abgeschaltet wird, und wobei der Zeitzähler bei dem aktuellen Wert wieder gestartet wird, wenn die Leistung des Kompressors (3) wieder hochgefahren wird bzw. der Kompressor (3) wieder eingeschaltet wird.

5. Verfahren nach einem der vorhergehenden Ansprüche, wobei ein Zusatzheizsystem (22) vorgesehen ist, um das Medium des weiteren Kreislaufes (16) zu erwärmen, wobei abhängig von einem Startparameter ein Zeitzähler vor dem Starten des Zusatzheizsystems (22) zu laufen beginnt, wobei das Zusatzheizsystem (22) eingeschalten wird, wenn der Zeitzähler einen festgelegten Wert erreicht, wobei ein eingeschaltetes Zusatzheizsystem (22) bei Abschalten des Kompressors (3) abgeschaltet wird, und wobei das Zusatzheizsystem (22) beim Hochfahren der Leistung des Kompressors (3) wieder eingeschaltet wird.

6. Verfahren nach einem der Ansprüche 2 bis 5, wobei der erste Grenzwert im Bereich von -3 °C liegt.

7. Verfahren nach einem der Ansprüche 3 bis 6, wobei der zweite Grenzwert im Bereich von -5 °C liegt.

8. Verfahren nach einem der Ansprüche 3 bis 7, wobei der Kompressor (3) abgeschaltet wird und nicht wieder automatisch gestartet wird, wenn die Temperatur des Mediums des weiteren Kreislaufes (16) im Zulauf zum Wärmetauscher (2) unter einem dritten Grenzwert liegt, der kleiner als der zweite Grenzwert ist und insbesondere im Bereich -6°C beträgt.

9. Verfahren nach einem der Ansprüche 2 bis 8, wobei als Grenzwert ein erster Grenzwert verwendet wird, und wobei die Leistung des Kompressors (3) nach der vorgegebenen Zeitdauer erhöht wird, wenn der Kompressor (3) vor der Reduzierung seiner Leistung oder vor seinem Abschalten länger als eine vorgegebene Zeit betrieben wurde.

10. Steuergerät (14) zum Steuern eines Kompressors (3) eines Wärmetauschers, wobei das Steuergerät ausgebildet ist, um ein Verfahren nach einem der vorhergehenden Ansprüche auszuführen, und ausgestattet ist mit einem Temperatursensor (13), um die Temperatur des Mediums im Zulauf des weiteren Kreislaufes (16) zu erfassen.

11. Wärmepumpensystem mit einer Wärmepumpe (8) mit einem Kompressor (3), mit einem Wärmetauscher (2), mit einem Kreislauf (19) eines Mediums auf einer Ausgangsseite des Wärmetauschers (2), mit einem weiteren Kreislauf (16) eines Mediums auf einer Eingangsseite des Wärmetauschers (2), wobei der weitere Kreislauf (16) den Wärmetauscher mit Erdwärme versorgt, mit einem Steuergerät (14) zum Steuern der Leistung des Kompressors (3), wobei ein Temperatursensor (13) vorgesehen ist, um eine Temperatur des Mediums im Zulauf des weiteren Kreislaufes (16) zu erfassen und an das Steuergerät (14) zu übermitteln,
**dadurch gekennzeichnet, dass** das Steuergerät (14) ausgebildet ist, um wenigstens eine Leistung des Kompressors (3) zu reduzieren oder um den Kompressor (3) abzuschalten, wenn die Temperatur des Mediums des weiteren Kreislaufes (16) im Zulauf zum Wärmetauscher (2) unter einem Grenzwert liegt, und dass das Steuergerät (14) ausgebildet ist, um die Leistung des Kompressors wieder zu erhöhen, wenn seit der Reduzierung der Leistung des Kompressors (3) eine vorgegebene Zeitdauer vergangen ist oder die Temperatur des Mediums des weiteren Kreislaufes (16) im Zulauf zum Wärmetauscher auf einen vorgegebenen Wert gestiegen ist.

## Claims

1. Method for controlling a compressor (3) of a circuit (19) on the output side of a heat exchanger (2) of a heat pump (8), wherein the heat exchanger (2) is supplied on an input side by a further circuit (16) using a geothermal medium,
**characterized in that** the compressor (3) is at least reduced in power output or switched off when the temperature of the medium of the further circuit (16) in the feed to the heat exchanger (2) lies below a limit value, and **in that** the power output of the compressor (3) is increased again when a predetermined time period since the reduction in the power output of the compressor (3) has passed or the temperature of the medium has increased by a predetermined value.

2. Method according to Claim 1, wherein a first limit value is used as the limit value, and wherein the power output of the compressor (3) is increased after the predetermined time period when the compressor (3) has been operated longer than a predetermined time.

3. Method according to Claim 1 or 2, wherein a second limit value is used as the limit value, wherein the second limit value is smaller than the first limit value, and wherein the power output of the compressor (3) is increased when the temperature of the medium in the further circuit (16) in the feed to the heat exchanger (2) has increased to a predetermined value.

4. Method according to one of the preceding claims, wherein an additional heating system (22) is provided, in order to heat the medium in the further circuit (16), wherein, depending on a starting parameter, a timer begins to run before the starting of the additional heating system (22), wherein the additional heating system (22) is switched on when the timer reaches a fixed value, wherein the timer is stopped as a momentary value when the power output of the compressor (3) is reduced or the compressor (3) is switched off, and wherein the timer is started again at the momentary value when the power output of the compressor (3) is raised again or the compressor (3) is switched on again.

5. Method according to one of the preceding claims, wherein an additional heating system (22) is provided, in order to heat the medium of the further circuit (16), wherein, depending on a starting parameter, a timer begins to run before the starting of the additional heating system (22), wherein the additional heating system (22) is switched on when the timer reaches a fixed value, wherein a switched-on additional heating system (22) is switched off when the compressor (3) is switched off, and wherein the additional heating system (22) is switched on again when the power output of the compressor (3) is raised.

6. Method according to one of Claims 2 to 5, wherein the first limit value lies in the range of -3°C.

7. Method according to one of Claims 3 to 6, wherein the second limit value lies in the range of -5°C.

8. Method according to one of Claims 3 to 7, wherein the compressor (3) is switched off and is not started again automatically if the temperature of the medium of the further circuit (16) in the feed to the heat exchanger (2) lies below a third limit value that is smaller than the second limit value and in particular lies in the range of -6°C.

9. Method according to one of Claims 2 to 8, wherein a first limit value is used as the limit value, and wherein the power output of the compressor (3) is increased after the predetermined time period if the compressor (3) has been operated for longer than a predetermined time before its power output is reduced or before it is switched off.

10. Control device (14) for controlling a compressor (3) of a heat exchanger, wherein the control device is designed to carry out a method according to one of the preceding claims, and is equipped with a temperature sensor (13), in order to sense the temperature of the medium in the feed of the further circuit (16).

11. Heat pump system with a heat pump (8) with a compressor (3), with a heat exchanger (2), with a circuit (19) of a medium on an output side of the heat exchanger (2), with a further circuit (16) of a medium on an input side of the heat exchanger (2), wherein the further circuit (16) supplies the heat exchanger with ground heat, with a control device (14) for controlling the power output of the compressor (3), wherein a temperature sensor (13) is provided, in order to sense a temperature of the medium in the feed of the further circuit (16) and transmit it to the control device (14), **characterized in that** the control device (14) is designed to reduce at least a power output of the compressor (3) or in order to switch off the compressor (3) when the temperature of the medium of the further circuit (16) in the feed to the heat exchanger (2) lies below a limit value, and **in that** the control device (14) is designed to increase the power output of the compressor again when a predetermined time period since the reduction in the power output of the compressor (3) has passed or the temperature of the medium of the further circuit (16) in the feed to the heat exchanger has increased to a predetermined value.

## Revendications

1. Procédé de commande d'un compresseur (3) d'un circuit (19) sur un côté de sortie d'un échangeur de chaleur (2) d'une pompe à chaleur (8), dans lequel l'échangeur de chaleur (2) est, sur un côté d'entrée, alimenté en énergie géothermique par le biais d'un fluide à l'aide d'un autre circuit (16),
**caractérisé en ce qu'**au moins la puissance du compresseur (3) est réduite ou arrêtée lorsque la température du fluide de l'autre circuit (16) dans l'amenée vers l'échangeur de chaleur (2) est inférieure à une valeur limite, et **en ce que** la puissance du compresseur (3) est à nouveau augmentée lorsque depuis la réduction de la puissance du compresseur (3) une durée prédéfinie s'est écoulée ou que la température du fluide a augmenté d'une valeur prédéfinie.

2. Procédé selon la revendication 1, dans lequel une première valeur limite est utilisée en tant que valeur limite, et dans lequel la puissance du compresseur (3) est augmentée après la durée prédéfinie lorsque le compresseur (3) a fonctionné plus longtemps qu'une durée prédéfinie.

3. Procédé selon la revendication 1 ou 2, dans lequel une deuxième valeur limite est utilisée en tant que valeur limite, dans lequel la deuxième valeur limite est inférieure à la première valeur limite, et dans lequel la puissance du compresseur (3) est augmentée lorsque la température du fluide dans l'autre circuit (16) dans l'amenée vers l'échangeur de chaleur (2) a augmenté jusqu'à une valeur prédéfinie.

4. Procédé selon l'une des revendications précédentes, dans lequel un système de chauffage supplémentaire (22) est prévu, afin de chauffer le fluide dans l'autre circuit (16), dans lequel, en fonction d'un paramètre de démarrage, un compteur de temps commence à fonctionner avant le démarrage du système de chauffage supplémentaire (22), dans lequel le système de chauffage supplémentaire (22) est mis en marche lorsque le compteur de temps atteint une valeur définie, dans lequel le compteur de temps est arrêté à une valeur actuelle lorsque la puissance du compresseur (3) est réduite ou que le compresseur (3) est arrêté, et dans lequel le compteur de temps est redémarré à la valeur actuelle lorsque la puissance du compresseur (3) a augmenté de nouveau ou que le compresseur (3) est remis en marche.

5. Procédé selon l'une des revendications précédentes, dans lequel un système de chauffage supplémentaire (22) est prévu pour chauffer le fluide de l'autre circuit (16), dans lequel, en fonction d'un paramètre de démarrage, un compteur de temps commence à fonctionner avant le démarrage du système de chauffage supplémentaire (22), dans lequel le système de chauffage supplémentaire (22) est mis en marche lorsque le compteur de temps atteint une valeur définie, dans lequel un système de chauffage supplémentaire (22) en marche est arrêté en cas d'arrêt du compresseur (3), et dans lequel le système de chauffage supplémentaire (22) est remis en marche en cas d'augmentation de la puissance du compresseur (3).

6. Procédé selon l'une des revendications 2 à 5, dans lequel la première valeur limite est de l'ordre de -3 °C.

7. Procédé selon l'une des revendications 3 à 6, dans lequel la deuxième valeur limite est de l'ordre de -5 °C.

8. Procédé selon l'une des revendications 3 à 7, dans lequel le compresseur (3) est arrêté et n'est pas redémarré automatiquement lorsque la température du fluide de l'autre circuit (16) dans l'amenée vers l'échangeur de chaleur (2) est inférieure à une troisième valeur limite qui est inférieure à la deuxième valeur limite et vaut en particulier de l'ordre de -6 °C.

9. Procédé selon l'une des revendications 2 à 8, dans lequel on utilise une première valeur limite comme valeur limite, et dans lequel la puissance du compresseur (3) est augmentée après la période prédéfinie lorsque le compresseur (3) a fonctionné plus longtemps qu'une durée prédéfinie avant la réduction de sa puissance ou avant son arrêt.

10. Appareil de commande (14) pour la commande d'un compresseur (3) d'un échangeur de chaleur, l'appareil de commande étant conçu pour mettre en œuvre un procédé selon l'une des revendications précédentes et étant équipé d'un capteur de température (13), pour détecter la température du fluide dans l'amenée de l'autre circuit (16) .

11. Système de pompe à chaleur comprenant une pompe à chaleur (8) comportant un compresseur (3), un échangeur de chaleur (2), un circuit (19) de fluide sur un côté de sortie de l'échangeur de chaleur (2), un autre circuit (16) de fluide sur un côté d'entrée de l'échangeur de chaleur (2), l'autre circuit (16) alimentant l'échangeur de chaleur en énergie géothermique, un appareil de commande (14) pour la commande de la puissance du compresseur (3), un capteur de température (13) étant prévu, pour détecter une température du fluide dans l'amenée de l'autre circuit (16) et la transmettre à l'appareil de commande (14),
**caractérisé en ce que** l'appareil de commande (14) est conçu pour réduire au moins une puissance du compresseur (3) ou pour arrêter le compresseur (3) lorsque la température du fluide de l'autre circuit (16) dans l'amenée vers l'échangeur de chaleur (2) est inférieure à une valeur limite, et **en ce que** l'appareil de commande (14) est conçu pour augmenter à nouveau la puissance du compresseur lorsque depuis la réduction de la puissance du compresseur (3) une durée prédéfinie s'est écoulée ou que la température du fluide de l'autre circuit (16) dans l'amenée vers l'échangeur de chaleur a augmenté jusqu'à une valeur prédéfinie.
